Europäisches Patentamt

European Patent Office

Office européen des brevets

(19)

(11) EP 1 372 006 A1

(12) EUROPEAN PATENT APPLICATION

(43) Date of publication:
17.12.2003 Bulletin 2003/51

(51) Int Cl.$^7$: G02B 6/16

(21) Application number: 02254195.7

(22) Date of filing: 14.06.2002

(84) Designated Contracting States:
AT BE CH CY DE DK ES FI FR GB GR IE IT LI LU
MC NL PT SE TR
Designated Extension States:
AL LT LV MK RO SI

(71) Applicant: Aston Photonic Technologies Ltd.
Birmingham B7 4BB (GB)

(72) Inventors:
• Allsop, Thomas David Paul
Aston Triangle, Birmingham B4 7ET (GB)

• Webb, David J.
Aston Triangle, Birmingham B4 7ET (GB)
• Bennion, Ian
Aston Triangle, Birmingham B4 7ET (GB)

(74) Representative: Chapman, Helga
Chapman Molony
Renshaw Barns
Upper Woodford
Salisbury SP4 6FA (GB)

(54) **Optical waveguide grating device and sensors utilising the device**

(57)  An optical waveguide grating device comprising a progressive three-layered (PTL) fibre (22), within which a long period grating (LPG) (24) is provided. The LPG's attenuation bands associated with cladding modes up to the 23$^{rd}$ radial mode, particularly cladding modes below mode order 15, are essentially insensitive to changes in the refractive index $n_s$ of a surrounding medium, but are sensitive to temperature. Attenuation bands associated with cladding modes greater than 26 have refractive index and temperature dependent sensitivity parameters which are non-zero. By appropriate selection of the cladding modes the device may be used to form a temperature sensor (30) or a refractive index sensor (20). A second grating device (50) comprises two LPGs (56), (58) provided in PTL fibre (52) in a spaced relationship to form an in-line Mach-Zehnder interferometer (60). The second device (50) may also be used to form a temperature or refractive index sensor 70. In particular, if some or all of the PTL fibre (52) between the two LPGs (56), (58) is heated, or the refractive index of the material surrounding it is changed, the interference fringes will travel across their respective attenuation bands. The LPG M-Z interferometer based device (50) can therefore be used as the sensing element within a temperature sensor or within a refractive index sensor (refractometer).

Figure 5

EP 1 372 006 A1

## Description

### Field of the Invention

The invention relates to an optical waveguide grating device and to sensors utilising the device, particularly, but not exclusively, refractive index and temperature sensors.

### Background to the Invention

Certain types of optical waveguide gratings, such as long period gratings (LPG), tilted Bragg gratings and very strong Bragg gratings, couple at least part of an optical signal propagating in an optical waveguide into one or more of the cladding modes of the waveguide. When these types of gratings are fabricated in a step-index single-mode optical waveguide, such as standard optical fibre, they couple light into cladding modes of the fibre, producing attenuation bands in the transmission spectrum of the grating. As a result, these gratings are sensitive to external influences. This can lead to problems regarding distinguishing between individual measurands. In addition, problems can occur when the optical fibre is recoated following the fabrication of a grating. For example, in a step-index fibre, the spectral position and strength of the LPG attenuation bands are dependent upon the refractive index of the surrounding medium. When the fibre is recoated, the refractive index of the surrounding medium changes, thereby altering the spectral profile of the LPG. This can be a particular problem when the gratings are to be used in telecommunications applications.

### Summary of the Invention

According to a first aspect of the present invention, there is provided an optical waveguide grating device comprising:

an optical waveguide having a core, a first cladding layer surrounding the core, and a second cladding layer surrounding the first cladding layer, wherein the refractive index of the first cladding layer being less than the refractive index of the core, and the refractive index of the second cladding layer being less than the refractive index of the first cladding layer, wherein the optical waveguide includes a grating section within which is provided an optical waveguide grating having a grating structure which couples at least part of an optical signal propagating in the optical waveguide and incident on the optical waveguide grating into at least one cladding mode of the optical waveguide.

The optical waveguide is preferably an optical fibre. The optical fibre is preferably a single mode multilayered optical fibre. The multilayered optical fibre may be a three layered optical fibre, such as progressive three layered optical fibre or matched index optical fibre. The multilayered optical fibre may alternatively comprise four or more layers. The optical waveguide may alternatively comprise a planar optical waveguide.

The optical waveguide grating may be a long period grating. The optical waveguide grating may alternatively be a strong Bragg grating, or may be a tilted Bragg grating. Further alternatively, two optical waveguide gratings, being long period gratings, may be provided within the grating section of the optical waveguide, the long period gratings being arranged to together form an in-line Mach-Zehnder interferometer.

According to a second aspect of the present invention, there is provided a temperature sensor comprising:

an optical waveguide grating device according to the first aspect of the invention;
an optical signal source coupled to one end of the optical waveguide and being operable to generate an optical signal; and
receiving means coupled to the other end of the optical waveguide, and being operable to detect a transmitted optical signal and convert the detected optical signal into a corresponding temperature value.

The temperature sensor may be insensitive to the refractive index of a surrounding medium, the optical waveguide grating coupling the at least part of the optical signal into at least one of the first to twenty-sixth radial order cladding modes of the optical waveguide. Preferably, the optical waveguide grating couples the at least part of the optical signal into at least one of the first to fifteenth radial order cladding modes of the optical waveguide.

According to a third aspect of the present invention, there is provided a refractive index sensor comprising:

an optical waveguide grating device according to the first aspect of the invention, the optical waveguide grating coupling the at least part of the optical signal into the twenty-seventh or higher radial order cladding mode of the optical waveguide;

an optical signal source coupled to one end of the optical waveguide and being operable to generate an optical signal; and

receiving means coupled to the other end of the optical waveguide, and being operable to detect a transmitted optical signal and convert the detected optical signal into a corresponding refractive index value.

The refractive index sensor may additionally sense temperature, preferably by the optical waveguide grating coupling part of the optical signal into one of the first to fifteenth radial order cladding modes. The receiving means is desirably further operable to simultaneously determine a corresponding temperature value from the detected optical signal. The receiving means may additionally be operable to compensate for the effect of temperature on the detected refractive index value.

**Brief Description of the Drawings**

Examples of the present invention will now be described in detail with reference to the accompanying drawings, in which:

Figure 1 is a diagrammatic representation of the refractive index profile of progressive three-layered optical fibre; according to a first embodiment of the invention, in the form of a long period grating Figure 2 shows the spectral profile of an optical waveguide grating device fabricated in progressive three-layered optical fibre: (a) first order and (b) second order;

Figure 3 shows the theoretical maximum values for the sensitivity parameter $\frac{d\lambda}{dn_s}$ of a long period grating fabricated in progressive three-layered optical fibre as a function of radial cladding mode order;

Figure 4 shows the theoretical values for the sensitivity parameter $\frac{d\lambda}{dT}$ of a long period grating fabricated in progressive three-layered optical fibre as a function of radial cladding mode order;

Figure 5 is a schematic representation of the experimental set up used to measure the dependence of the spectral characteristics of a long period grating on the refractive index $n_s$ of the surrounding medium;

Figure 6 shows the spectral response of the attenuation band corresponding to the 5th order cladding mode for a long period grating fabricated in progressive three-layered optical fibre having a grating period ($\Lambda$) of 210µm and a length of 15cm;

Figure 7 shows the experimental values for the sensitivity parameter $\frac{d\lambda}{dn_s}$ of a long period grating fabricated in progressive three-layered optical fibre as a function of radial cladding mode order;

Figure 8 is a schematic representation of the experimental set up used to measure the dependence of the spectral characteristics of a long period grating on temperature;

Figure 9 shows the experimental values for the sensitivity parameter $\frac{d\lambda}{dT}$ of a long period grating fabricated in progressive three-layered optical fibre as a function of radial cladding mode order measured at a temperature of 110°C;

Figure 10 shows the spectral response at 25 °C and 80 °C of the attenuation bands associated with the 9th and 10th cladding modes of a long period grating fabricated in progressive three-layered fibre having a grating period ($\Lambda$) of 100µm and a length of 15cm;

Figure 11 shows the spectral response at 25 °C and 45 °C of the attenuation bands associated with the 22nd and 23rd cladding modes of a long period grating fabricated in progressive three-layered fibre having a grating period ($\Lambda$) of 60µm and a length of 15cm;

Figure 12 is a diagrammatic representation of a temperature sensor according to a second embodiment of the invention;

Figure 13 is a diagrammatic representation of a refractive index sensor according to a fifth embodiment of the invention, including an optical waveguide grating device according to a fourth embodiment of the invention;

Figure 14 shows the theoretical relationship between accumulated phase change and surrounding refractive index for a refractive index sensor of the type shown in Figure 13;

Figure 15 shows a theoretically calculated parametric plot of the harmonics of the laser modulation frequency as a function of the refractive index of the surrounding medium for a refractive index sensor of the type shown in Figure 13;

Figure 16 shows an experimentally recorded parametric plot of the first and second harmonics of the laser modulation frequency as a function of the refractive index of the surrounding medium for the refractive index sensor of Figure 13; and

Figure 17 shows a plot of the inverse tangent of the ratio of the first to second harmonics of the measurements of Fig. 16 as a function of surrounding refractive index.

**Detailed Description**

In a first embodiment of the invention, an optical waveguide grating device comprises an optical waveguide in the form of a section of progressive three-layered (PTL) optical fibre (also known as matched index optical fibre), including a grating section within which an optical waveguide grating in the form of a long period grating (LPG) is provided.

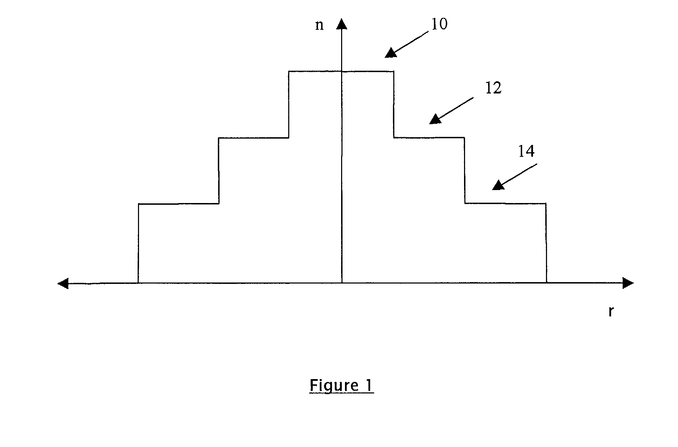

Referring to Fig. 1, the PTL fibre has a core 10, a first (inner) cladding layer 12 surrounding the core 10, and a second (outer) cladding 14 layer surrounding the first cladding layer 12. The refractive index of the first cladding layer 12 is less than the refractive index of the core 10, and the refractive index of the second cladding layer 14 is less than the refractive index of the first cladding layer 12.

The LPG couples light propagating in the PTL fibre incident on the LPG into one or more forward-propagating cladding modes of the PTL fibre. The skilled person will appreciate that the LPG may be replaced by a different type of optical waveguide grating which also couples at least part of the incident light into one or more cladding modes of the fibre, for example a strong Bragg grating or a tilted Bragg grating.

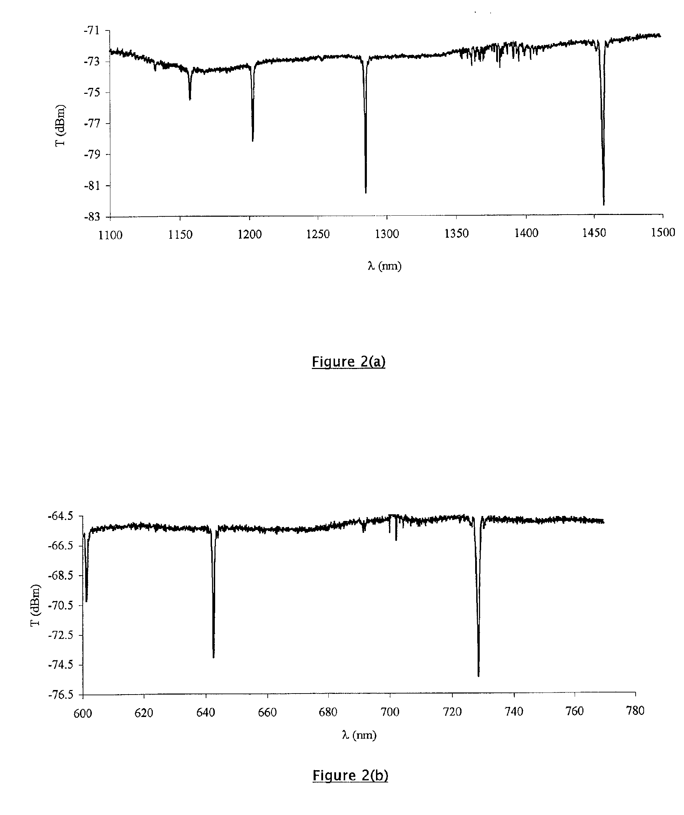

The light coupled by the LPG into the forward-propagating cladding modes of the PLT fibre, decays rapidly through radiation. The fibre supports many cladding modes, therefore the LPG couples light into a number of cladding modes. This gives the LPG an optical transmission spectrum having corresponding number of attenuation bands. For example, the transmission (T) spectrum of an LPG having a period ($\Lambda$) of 240 µm and a length of 8cm is shown in Fig. 2, where part (a) shows the first order response and part (b) shows the second order response.

The central wavelength $\lambda_v$ of an attenuation band is specified by the phase-matching condition

$$\delta n_{eff_v} \Lambda = \lambda_V, \tag{1}$$

where $\Lambda$ is the grating period and $\delta n_{eff_v}$ is the differential effective index between the core and a particular cladding mode, given by

$$\delta n_{eff_v} = \left[ n_{co}^{\,01}(\lambda, \varepsilon, T, n_1, n_2) - n_{cl}^{\,1v}(\lambda, \varepsilon, n_1, n_2, n_3 n_s, T) \right] \tag{2}$$

where, $n_{co}^{01}$ is the effective refractive index of the core mode, and $n_{cl}^{1v}$ is the effective refractive index of the $v^{th}$ radial cladding mode. 01 denotes the $LP_{01}$ core mode and $1v$ denotes the $HE_{1_v}$ axially symmetric cladding modes. Both $n_{co}^{01}$ and $n_{cl}^{1v}$ are dependent on the core refractive index $n_1$, the inner cladding refractive index $n_2$, the wavelength $\lambda$ of the incident light, temperature T and the strain $\varepsilon$ experienced by the fibre. $n_{cl}^{1v}$ is additionally dependent on the refractive index $n_3$ of the outer cladding layer, and the refractive index $n_s$ of the medium surrounding the grating section of the PTL fibre.

If we assume that the grating consists of a circularly symmetric index perturbation transverse to the axis of the fibre, then the only non-zero coupling coefficients between the core mode and the cladding modes involve cladding modes of azimuthal order 1. The number of cladding modes, and their spectral properties, are determined by the structure of the optical fibre, in this example PTL. This geometrical dependence is taken into account when deriving the dispersion relation for a given refractive index profile. The properties of individual cladding modes may be observed through their associated attenuation bands.

Replacing $1v$ with $v$, the values of the effective refractive indices ($n_{co}^{01}$, $n_{cl}^{v}$) and of the group ($n_{cog}$, $n_{clg_v}$) refractive indices of the core and cladding modes are obtained by solving numerically the dispersion relationship for a 4-layered fibre using the technique described by Yeh & Lindgren (Applied Optics, volume 16, no.2, pp483-493, 1977).

In general, as $n_s$ increases, the spectral sensitivity,

$$\left( d\lambda \Big/ dn_s \right)_v$$

increases monotonically to a maximum value, which occurs at the value of $n_s$ at which the mode becomes unguided. The maximum value of the spectral sensitivity is given by

$$\left(\frac{d\lambda}{dn_S}\right)_V = \left(\frac{\lambda}{\left(\delta n_{eff_V} - \delta n_{g_V}\right)}\right)\left(-\left[\frac{n_S}{n_{cl}^V}\right]\left(\frac{U_{*V}}{\upsilon_V}\right)^2\left[1+\left(\frac{\upsilon_V}{2}\right)\cdot\frac{U_{\infty}(v)^2}{(1+\upsilon_V)^3}\right]\right) \qquad (3)$$

where $\delta n_g = n_{cog} - n_{clg_v}$ is the differential group refractive index between the core and the cladding mode, $\upsilon_v^2 = u_k^2 + u_{k+1}^2$, where $u_k$ and $u_{k+1}$ are the phase parameters for consecutive cladding layers of the optical fibre, and $n_k$ is the refractive index of the $k^{th}$ layer. Here the maximum value of $k+1$ is 4, where the fourth layer is the medium surrounding the fibre. The phase parameter must be real for the mode to be guided within the fibre.

$U_{\infty}(v)$ is the value taken by u when $\upsilon$ (the normalised frequency) becomes infinite for the $v^{th}$ mode. $U^*$ is the approximate expression for the phase parameter $u_v$, obtained from the characteristic equation of a fibre waveguide when $\upsilon$ becomes large.

To calculate the spectral behaviour of cladding modes with respect to temperature and the refractive index $n_s$ of the surrounding medium, we must know some of the physical characteristics of the fibre being used. In this example PTL fibre was used, supplied by Fibercore Ltd (SMM900, DF1500-0980). The relevant physical characteristics are summarised below:

| Layer | Refractive Index | Thermal expansion Coefficient (C$^{-1}$) | Thermo-optic Coefficient (C$^{-1}$) | Radius (m) | Material composition |
|---|---|---|---|---|---|
| core | $n_1$= 1.4555 | $4.1\times10^{-7}$ | $7.8\times10^{-6}$ | $r_1$=2.625x10$^{-6}$ | $GeO_2$ / $SiO_2$ |
| inner cladding | $n_2$=1.4438 | $6,1\times10^{-7}$ | $9.1\times10^{-6}$ | $r_2$=45.2x10$^{-6}$ | $SiO_2$ |
| outer cladding | $n_3$=1.4143 | $2.5\times10^{-7}$ | $8.3\times10^{-6}$ | $r_3$=62.5x10$^{-6}$ | $SiO_2$/F/$P_2O_5$ |

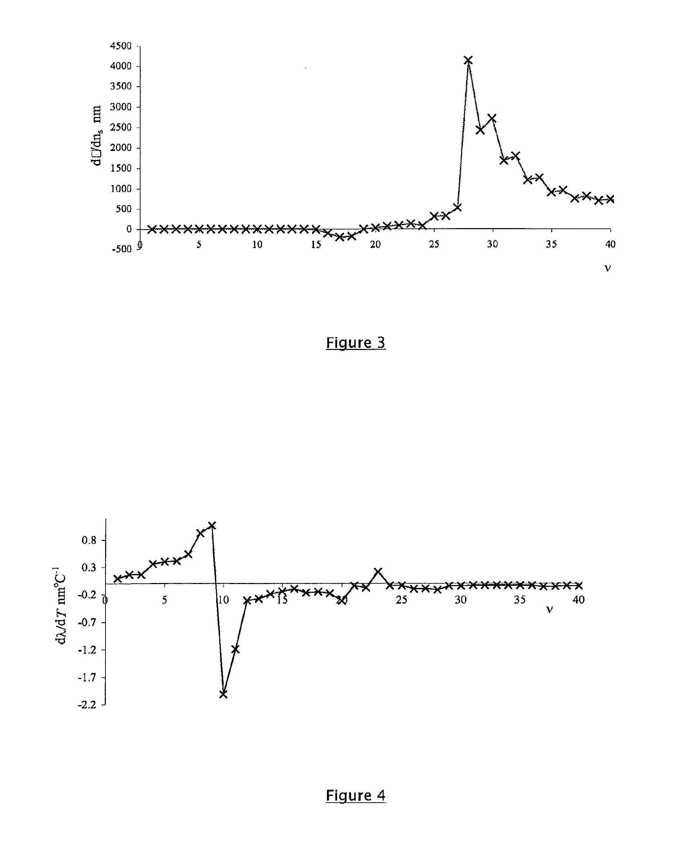

Looking first at the spectral behaviour of the cladding modes with respect to the refractive index $n_s$ of the surrounding medium, Fig. 3 shows the theoretically predicted maximum values for the sensitivity parameter $\frac{d\lambda}{dn_s}$ for an LPG fabricated in PTL fibre as a function of radial cladding mode order ($v$). An important feature to note is that for $v <$ 15, the maximum value of the sensitivity parameter $\frac{d\lambda}{dn_s}$ is very low, having a magnitude of much less than 1 nm. By way of comparison, an LPG fabricated in standard single mode optical fibre would typically have a maximum value of $\frac{d\lambda}{dn_s}$ of more than 1000 nm. Another feature of interest is the large increase in $\frac{d\lambda}{dn_s}$ at $v$ = 26. This is caused by the fact that at this point the cladding modes change from being guided by the inner cladding layer 12 to effectively being guided by the outer cladding layer 14. As a result, these cladding modes are far more susceptible to the influence of the surrounding medium.

The temperature dependent spectral sensitivity parameter $\frac{d\lambda}{dT}$ of the LPG as a function of radial cladding mode ($v$) order may be predicted using the following equation:

$$\left(\frac{d\lambda}{dT}\right)_V = \left(\frac{\lambda}{\left(\delta n_{eff_V} - \delta n_{g_V}\right)}\right)\cdot\left(\frac{dn_{CO}}{dT} - \frac{dn_{cl}^V}{dT}\right) + \frac{\left(\delta n_{eff_V}\right)^2}{\delta n_{g_V}}\cdot\frac{\Lambda}{L}\cdot\frac{dL}{dT}, \qquad (4)$$

where $\frac{dn_{CO}}{dT}$ is the thermo-optic coefficient of the core mode, and can be calculated from the thermo-optic coefficient of the core material. $\frac{dn_{cl}}{dT}$ is the thermo-optic coefficient of the $v^{th}$ cladding mode, and may be calculated approximately from the thermo-optic coefficient of the material of the cladding layer which contains the majority of the optical energy of the $v^{th}$ cladding mode. $\frac{1}{L}\frac{dL}{dT}$ is the thermal expansion coefficient of the core material.

The theoretically predicted maximum values of the sensitivity parameter $\frac{d\lambda}{dT}$ are shown in Fig. 4. An important feature of Fig. 4 is the change in sign of the sensitivity parameter which occurs between the 9$^{th}$ and 10$^{th}$ cladding modes. Another noteworthy feature is that, unlike its neighbouring modes, the 23$^{rd}$ mode has a positive maximum value of $\frac{d\lambda}{dT}$. This particular feature is not observed in LPGs fabricated in standard single mode optical fibre.

Following the above described theoretical investigations of the properties of an LPG fabricated in PTL fibre, experimental measurements were made. A number of LPGs having a length of 15cm were fabricated in PTL fibre using the known amplitude mask grating fabrication technique. A detailed description of the fabrication technique will not be given here, since it will be well known to persons skilled in the art, except to say that a pulsed frequency quadrupled YAG laser and various amplitude masks were used. Each LPG had a different grating period ($\Lambda$), ranging from 6 $\mu$m to 550 $\mu$m. The PTL fibre was designed by its manufacturers for use in a cladding pumped erbium doped fibre laser, and it is therefore not particularly photosensitive. The photosensitivity of the PTL fibre was therefore increased to a level suitable for grating fabrication by hydrogenation at a pressure of 120 Bar at room temperature over a period of 2 weeks. Characterisation of the attenuation bands of the LPGs was carried out by illuminating each LPG using a broadband light source and observing the transmission spectrum using an optical spectrum analyser (OSA).

In order to make a better comparison between the spectral sensitivity of individual cladding modes of the various LPGs, only attenuation bands lying within a restricted range of wavelengths were selected, to thereby minimise the effect of the wavelength dependence of the sensitivity parameters being investigated. The attenuation bands selected for investigation are summarised below:

| $\Lambda$ $\mu$m | Selected radial mode(s) ($v$) | Central wavelength of Attenuation band at $n_s$=1 (nm) |
|---|---|---|
| 350 | 2,3 | 1365, 1415 |
| 240 | 4,5 | 1285, 1457 |
| 185 | 6 | 1289 |
| 156 | 7 | 1226 |
| 110 | 8 | 1067 |
| 100 | 9,10 | 1252, 1439 |
| 78 | 14 | 1552                5 |
| 72 | 17,18 | 1178, 1201 |
| 69 | 19 | 1417 |
| 60 | 22,23 | 1663, 1670 |
| 52 | 26,27 | 1420, 1450 |
| 42 | 28 | 1300 |
| 20 | 53,54,55 | 1154, 1196, 1231 |

The radial order of cladding modes at $\lambda_v$ was determined by using three/four-layer optical fibre analysis.

The experimental apparatus 20 used to measure the dependence of the spectral characteristics of an LPG on the refractive index $n_s$ of the surrounding medium is shown in Fig. 5. The apparatus 20 comprises a broadband optical source 18, coupled to a PTL fibre 22 including a grating section containing the LPG 24, and an aluminium plate 26 having a V-groove 28 formed across its uppermost surface. The plate 26 sits on an optical table (not shown), which acts as a heat sink, thereby minimising fluctuations in the temperature of the plate 26 and the grating 24. This is important in order to avoid wavelength drift in the attenuation bands of the spectral profile of the LPG 24. The spectral profile of the LPG 24 is measured using an optical spectrum analyser (OSA) 29, having a wavelength measurement resolution of 0.08 nm.

The refractive index $n_s$ of the medium surrounding the LPG 24 is set by immersing the LPG grating section of the fibre 22 in various certified refractive index (CRI) liquids, having refractive index values accurate to ±0.0002. The grating section and the V-groove 28 must be cleaned, washed in methanol and then deionised water and dried before use. The V-groove can then be filled with CRI liquid and the LPG 24 immersed in the CRI liquid. The cleaning procedure is required to reduce the amount of salts deposited on the fibre by the CRI liquids. The presence of salt deposits would change the value of the effective refractive index of the surrounding medium (CRI liquid).

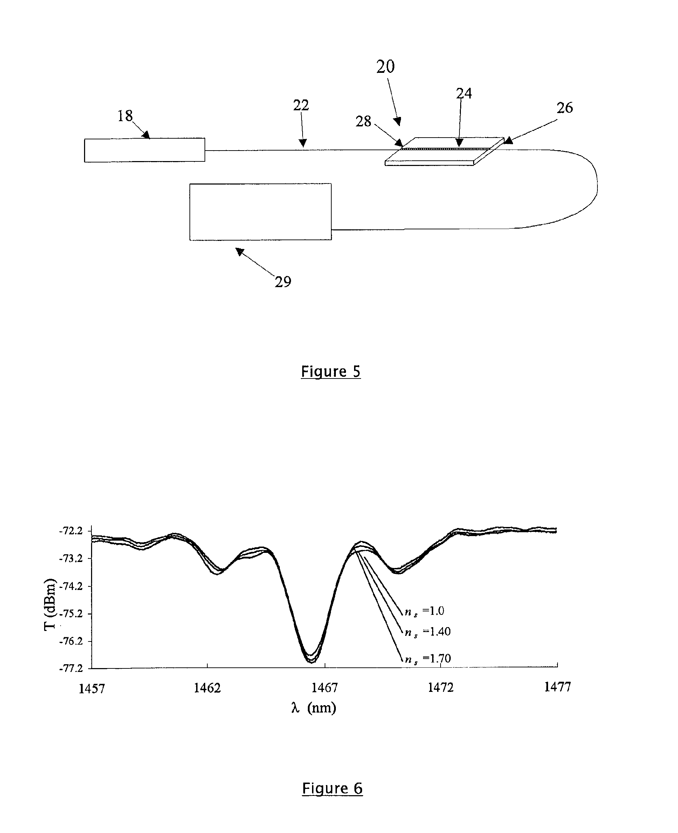

Each LPG was immersed in two different CRI liquids, one having n = 1.4 and the other having n = 1.7. It was found that the attenuation bands associated with cladding modes up to the 23rd cladding mode were essentially insensitive to changes in the refractive index $n_s$ of the surrounding medium. For example, referring to Fig. 6, the spectral response of the attenuation band associated with the 5th cladding remains essentially unchanged for three different surrounding refractive indices ( n = 1 [air], n = 1.4 and n = 1.7). In fact, all cladding modes below mode order 14 were found to be similarly insensitive to changes in the refractive index of the surrounding medium. This indicates that these cladding modes predominantly exist within the inner cladding 12 of the PTL fibre 22.

The attenuation bands associated with the 15th to 22nd cladding modes were observed to display both red and blue spectral shifts with respect to changes in the refractive index $n_s$ of the surrounding medium. In particular, the central wavelengths of the attenuation bands of the selected cladding modes (17th and 18th) of the 72$\mu$m grating period LPG were observed to shift towards shorter wavelengths (blue shift) as the refractive index $n_s$ of the surrounding medium increased. The central wavelength of the attenuation band of the selected cladding mode (19th) of the 69$\mu$m grating period LPG was observed to shift towards longer wavelengths (red shift) as $n_s$ increased.

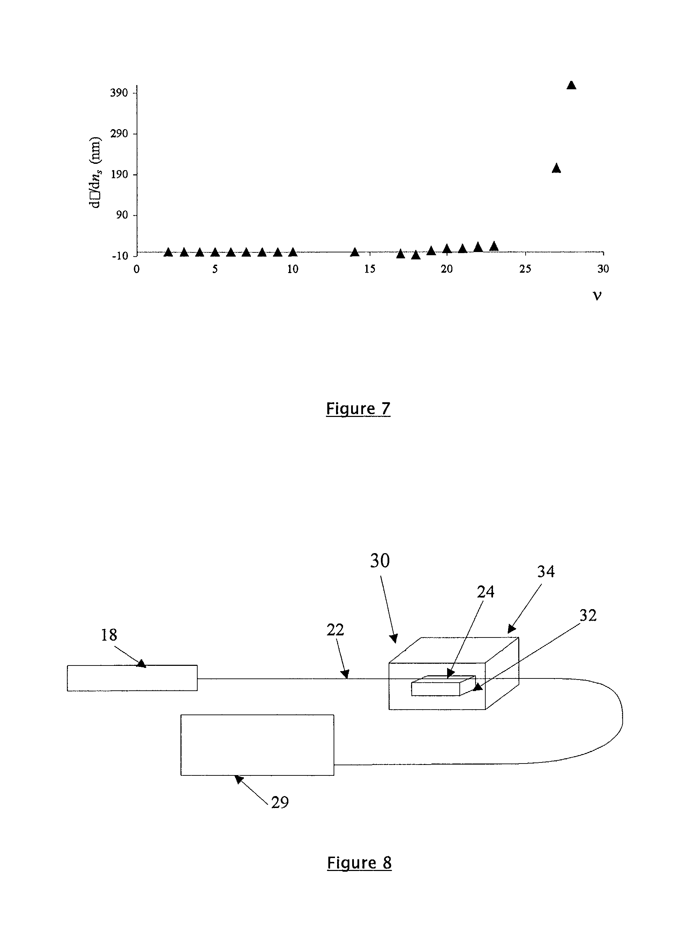

Referring to Fig. 7, the refractive index dependent sensitivity parameter $\frac{d\lambda}{dT}$ was measured for each cladding mode. It can be seen from these results that higher order cladding modes ($27^{th}$ and above) display a much greater sensitivity to the refractive index $n_s$ of the surrounding medium than the lower order cladding modes. This can be explained by the fact that these higher order cladding modes exist within the outer cladding of the PTL fibre.

There are differences between the experimental and theoretical results, but this is to be expected. The theoretical values correspond to the maximum sensitivity which occurs when the refractive index of the surrounding medium is such that the cladding mode is only just guided, whereas the experimental results were obtained using CRI liquids having two very different refractive indices, both someway below the index where the mode becomes unguided. It is therefore to be expected that the theoretical values would have a greater magnitude. The experimental results do however confirm the general trends predicted by the theory.

The experimental apparatus 30 used to measure the dependence of the spectral characteristics of an LPG on temperature is shown in Fig. 8 and is substantially the same as that shown in Fig. 5, with the following modification. The same reference numerals are used for corresponding features. The V-groove plate 26 and CRI liquids are replaced with an insulated Peltier element 32 across which the section of the PTL fibre 22 containing the LPG 24 is located. The temperature of the LPG 24 is varied by increasing and decreasing the temperature of the Peltier element 32. The Peltier element 32 and the LPG 24 are located within a housing 34 which helps to maintain the Peltier element 32 at the desired temperature.

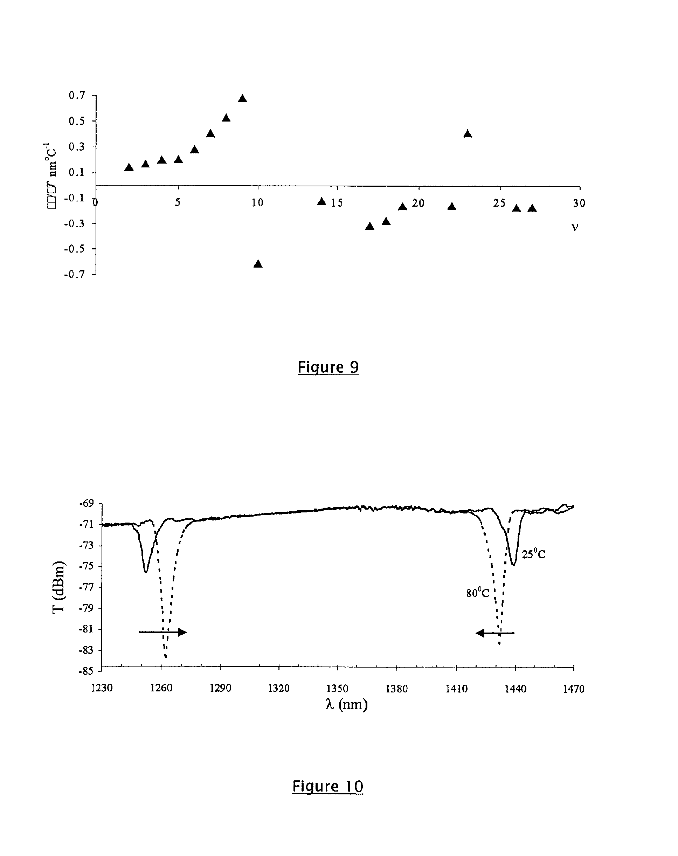

Each LPG was heated and the resulting wavelength shift of its attenuation bands measured. Fig. 9 shows the sensitivity parameter $\frac{d\lambda}{dT}$ for each cladding mode for an LPG heated from room temperature (25 °C) to 110 °C. As can be seen, there is a much closer match between the theoretically predicted values of $\frac{d\lambda}{dT}$ (Fig. 4) and the experimentally measured values of $\frac{d\lambda}{dT}$ shown in Fig. 9.

In particular, the change in sign of the sensitivity parameter $\frac{d\lambda}{dT}$ between modes 9 and 10 is noticeably present. This can be seen more clearly in Fig. 10 which shows the spectral response of the attenuation bands associated with the $9^{th}$ and $10^{th}$ radial order cladding modes of an LPG (having a period $\Lambda = 100$ µm and length of 15 cm) heated from 25°C (solid line) to 80°C (dashed line). The direction of the wavelength shift with increased temperature is indicated by the arrows in Fig. 10.

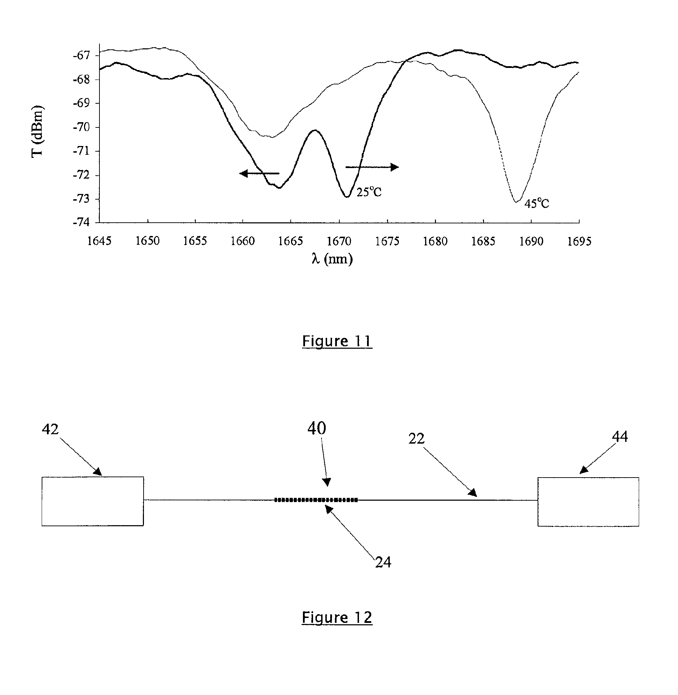

The anomalous positive sensitivity of mode 23 is also visibly present in Fig. 8. This feature can be seen more clearly in Fig. 11 which shows the spectral response of the attenuation bands associated with the $22^{nd}$ (left) and $23^{rd}$ (right) radial order cladding modes of an LPG (having a period $\Lambda = 60$ µm and a length of 15 cm) heated from 25°C (dark line) to 45°C (faint line). The $23^{rd}$ mode clearly displays a strong positive (red shift) sensitivity, while the $22^{nd}$ mode shows a weaker negative (blue shift) sensitivity.

Both the theoretically predicted values (Figs. 3 and 4) and the experimentally measured values (Figs. 7 and 9) of the sensitivity parameters $\frac{d\lambda}{dn_s}$ and $\frac{d\lambda}{dT}$ demonstrate that the cladding modes within the PTL fibre display two different sensitivity regimes for temperature T and refractive index $n_s$ of the surrounding medium as a function of radial modal order $v$.

Firstly, it can be seen that attenuation bands associated with cladding modes of radial order 26 or less are highly insensitive to changes in the surrounding refractive index. This is particularly true for cladding modes of radial order 15 or less. That is to say, for cladding modes of radial order 15 or less, the refractive index dependent sensitivity parameter is substantially equal to zero. For these same modes the temperature dependent sensitivity parameter is non-zero. This first sensitivity regime may be summarised as follows: when

$$v \leq 15, \quad \left(\frac{d\lambda}{dn_s}\right)_v \approx 0 \ \text{ and } \ \left(\frac{d\lambda}{dT}\right)_v \neq 0$$

An LPG 24 fabricated in PTL fibre 22 operating in this regime may be used to provide a temperature sensor 40 according to a second embodiment of the invention, as illustrated in Fig. 12. In addition to the LPG 24 fabricated in PTL fibre 22, the temperature sensor 40 comprises an optical signal source in the form of a broad band optical source 42 operable to generate a broad band optical signal, and receiving means 44 operable to detect an optical signal transmitted by the LPG 24 and to convert the detected optical signal into a corresponding temperature value. The optical source 42 is coupled to one end of the PTL fibre 22 and the receiving means 44 is coupled to the other end of the PTL fibre 22.

The insensitivity of an LPG operating in this first regime to changes in the refractive index $n_s$ of the surrounding medium may be utilised to reduce the sensitivity of LPGs to the material used to recoat a grating section of fibre following fabrication of an LPG.

The second sensitivity regime covers cladding modes of radial order greater than 26. For these modes the refractive index dependent sensitivity parameter is non-zero and the temperature dependent sensitivity parameter is also non-zero. This second regime can be summarised as:

$$\nu > 26, \quad \left(\frac{d\lambda}{dn_s}\right)_\nu \neq 0 \quad \text{and} \quad \left(\frac{d\lambda}{dT}\right)_\nu \neq 0$$

An LPG 24 fabricated in PTL fibre 22 operating in this second regime may be utilised to provide a refractive index sensor according to a third embodiment of the present invention. The refractive index sensor is of substantially the same construction as the temperature sensor 40 shown in Fig. 12, with the modification that the receiving means 44 is operable to convert a detected optical signal into a corresponding refractive index value.

Using cladding modes of a radial order of greater than 26, the refractive index sensor is fairly insensitive to thermal fluctuations, being only slightly temperature sensitive (see Figs. 4 and 9). However, by simultaneously operating in both sensitivity regimes, i.e. by monitoring the attenuation bands of a single LPG corresponding to a cladding mode in each regime, the refractive index sensor may also be used to measure temperature. The temperature measurements may then be used to apply temperature compensation to the refractive index measurements.

The attenuation band associated with $\nu$=23 exhibits sensitivity of a different sign compared to neighbouring bands. The 23rd mode is one of the more sensitive cladding modes to temperature and also displays some refractive index sensitivity. This mode may be utilised in order to produce a sensor capable of performing simultaneous measurement of refractive index, temperature and strain. For example, a sensor utilising modes 9 or 10, 23, and a mode of radial order 25.or above could be used to perform such a three-way simultaneous measurement.

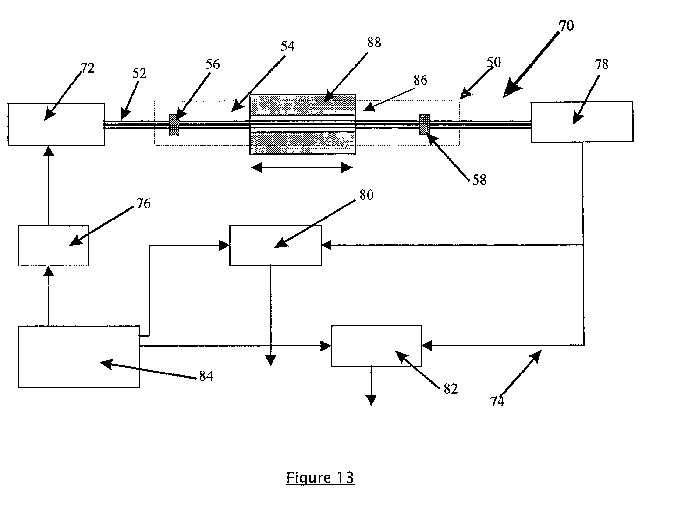

Referring to Fig. 13, a fourth embodiment of the invention provides an optical waveguide grating device 50 comprising an optical waveguide, in the form of a section of PTL optical fibre 52, including a grating section 54 within which two optical waveguide gratings, in the form of LPGs 56, 58, are provided, the LPGs being arranged in a spaced relationship to together form an in-line Mach-Zehnder (M-Z) interferometer 60.

Each LPG 56, 58 has a strength of 3dB and a grating period of 240μm. The LPGs 56, 58 the separation distance between the LPGs 56, 58 is 20cm. The LPGs 56, 58 were UV inscribed in the PTL fibre 52 using a pulsed frequency quadrupled YAG laser and an amplitude mask. This method of fabricating LPG gratings will be well know to the skilled person and so will not be described in detail here. This generated an attenuation band with a centre wavelength at 1549nm associated with the 9th cladding mode.

The M-Z interferometer 60 generates a series of interference fringes within the attenuation band of each of the LPGs 56, 58. The interference fringes are generated as a result of interference between light propagating directly through the PTL fibre 52 core and light that has been coupled to a cladding mode by the first LPG 56 and then back into the core by the second LPG 58. If some or all of the PTL fibre 52 between the two LPGs 56, 58 is heated, or the refractive index of the material surrounding it is changed, the interference fringes will travel across their respective attenuation bands. The LPG M-Z interferometer based device 50 can therefore be used as the sensing element within a temperature sensor or within a refractive index sensor (refractometer).

Referring to Figs. 13 to 17, a fifth embodiment of the invention provides a refractive index sensor 70 comprising an optical waveguide grating device 50 according to the fourth embodiment of the invention, an optical signal source in the form of a distributed feedback (DFB) laser 72 coupled to one end of the PTL fibre 52 and receiving means 74 coupled to the other end of the PTL fibre 52.

The DFB laser 72 is a thermally stabilised pigtailed DFB laser, operable to generate a laser output at a wavelength of 1549nm. The DFB laser 72 is driven by a drive unit 76 which supplies an injection current to the DFB laser 72. The injection current is modulated to produce a small sinusoidal wavelength modulation on laser output signal. The wavelength modulation has a frequency of 5kHz and an amplitude of approximately 0.06nm.

The receiving means 74 comprises a photo-detector 78, the output of which is fed to two lock-in-amplifiers 80, 82, for performing synchronous detection. One of the lock-in-amplifiers 80 is referenced at a frequency of 5kHz ($\omega_0$) and the other lock-in amplifier 82 is referenced at 10kHz ($2\omega_0$), enabling measurement of the amplitudes of the first and second harmonics at the modulation frequency of the DFB laser 72, as will be described in more detail below. The reference frequencies are provided by a frequency generator 84.

A 10cm section of the PTL fibre 52 between the two LPGs 56, 58 is selected as the interaction length of the M-Z interferometer 60. It is this interaction length of the PTL fibre 52 which has its surrounding refractive index changed. The interaction length of the PTL fibre 52 is located within a V-groove 86 formed in an aluminium plate 88. The aluminium plate 88 is located on a heat sink, in this example an optical table (not shown), to maintain a constant temperature. This is necessary in order to minimise thermal fluctuations, which would induce spectral drift of the attenuation band or changes to the fringes within the attenuation band. The refractive index of the medium surrounding the interaction length of the PTL fibre 52 is changed by immersing the fibre in certified refractive index liquids.

The LPG Mach-Zehnder interferometer 60 is illuminated by a laser 72 that has a sinusoidal wavelength modulation at an angular frequency $\omega_0$ induced by the modulation of the injection current. Using synchronous detection at $\omega_0$ and $2\omega_0$ on the output from the photodetector 78 allows the amplitude of the harmonics generated to be obtained.

It can be shown that taking the ratio of these two harmonics yields:

$$\frac{\text{Amp}_{\omega 0}}{\text{Amp}_{2\omega 0}} = \frac{J_1(\Delta\theta)}{J_2(\Delta\theta)} . \tan(\Delta\phi), \tag{5}$$

where $\Delta\theta = \frac{2\pi n L}{c} \frac{\delta\upsilon}{\delta i} . \Delta i$ is the phase modulation induced within the interferometer 60, $\frac{\delta\upsilon}{\delta i}$ is the current-to-frequency conversion factor of the DFB laser 72 and $\Delta i$ modulation amplitude applied to the injection current. $J_1(\Delta\theta)$ and $J_2(\Delta\theta)$ are Bessel functions of the first kind and $\Delta\phi$ is the measurand dependent phase difference within the interferometer, given by

$$\Delta\phi = \frac{2\pi L}{\lambda_{\text{laser}}} . \frac{\mathrm{d}\delta n_{eff}}{dn_s} \Delta n_s, \tag{6}$$

where $n_{eff}$ is the effective refractive index of the PTL fibre 52 and $n_s$ is the refractive index of the surrounding medium.
Combining expressions 2 and 3, an equation can be found to link the total phase change measured by the LPG Mach-Zehnder interferometer 60 to the change in the refractive index of the surrounding medium:

$$\Delta n_s = \frac{\lambda_{\text{laser}}}{2\pi L F(n_s)} . \tan^{-1}\left[\frac{J_2(\Delta\theta)}{J_1(\Delta\theta)} . \frac{\text{Amp}_{\omega 0}}{\text{Amp}_{2\omega 0}}\right]. \tag{7}$$

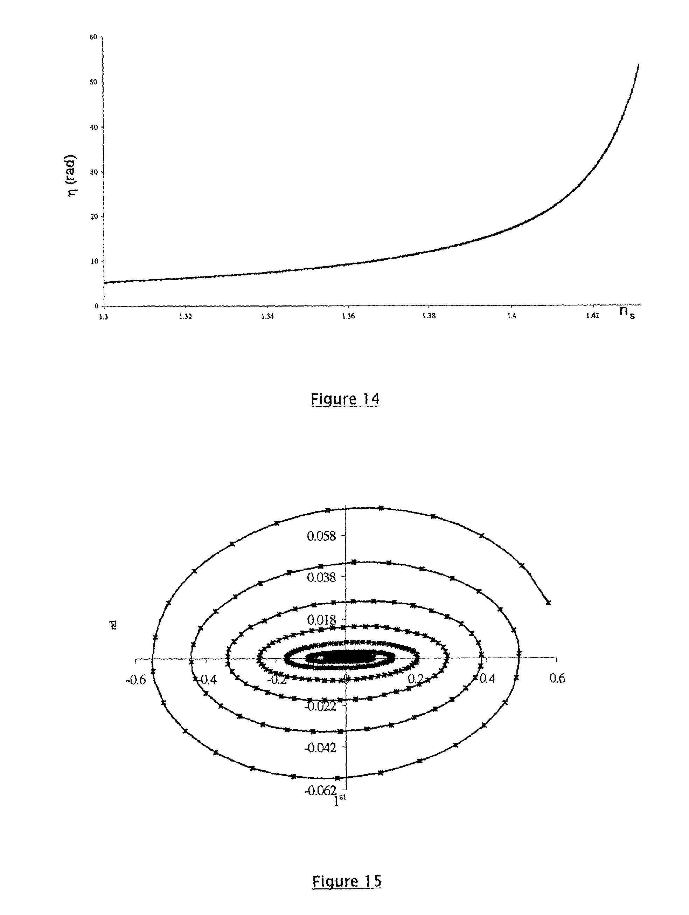

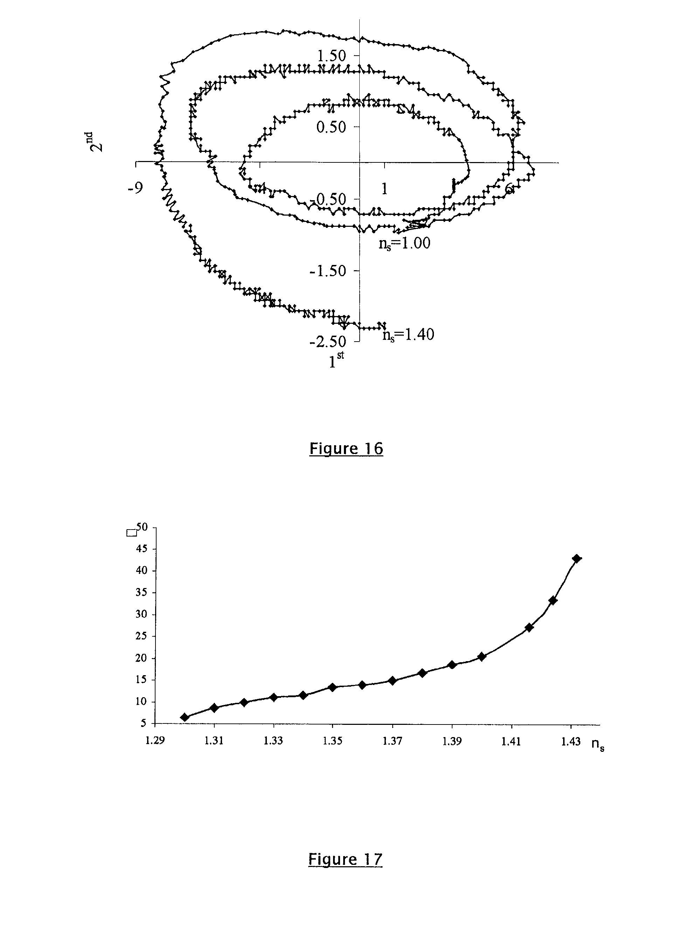

Fig. 14 shows the theoretical relationship between accumulated phase change ($\phi$) of an LPG Mach-Zehnder interferometer and the refractive index of the surrounding medium ($n_s$) for the 9th cladding mode of an LPG M-Z interferometer fabricated in a single mode Boron Germanium co-doped fibre with an interaction length of 10cm and an LPG separation distance of 20 cm. The 9th cladding mode is chosen because the associated attenuation band of this mode matches spectrally with the wavelengths of DFB lasers available around 1550 nm and because of the attenuation bands which did spectrally match the DFB lasers, this one is the most sensitive to changes in the refractive index $n_s$ of the surrounding medium. In calculating the relationship shown in Fig. 14, the effective index and group refractive index of the 9th cladding mode as a function of $n_s$ were determined and substituted into equation 6 to obtain the interferometric phase. The graph shown in Fig. 14 has this particular form because as $n_s$ increases more of the cladding mode extends into the surrounding medium leading to a supra-linear increase in the effective cladding mode index. This effect also manifests itself as a chirp in the period of the fringes within the stop band.
Fig. 15 shows a theoretically calculated parametric plot of the harmonics of the modulation frequency as a function of the refractive index of the surrounding medium, assuming a modulation amplitude on the laser output of 0.053 nm. It may be seen that as the refractive index of the surrounding medium increases, a consequence of the reduction in the free spectral range of the interference fringes is that the amplitudes of the harmonics increases. As a result the curve in Fig. 15 spirals outwards and a measurement of its radius may be used to remove the $2\pi$ phase ambiguity from the interferometer, thereby allowing unambiguous measurement of the surrounding refractive index.
Returning to the refractive index sensor shown in Fig. 13, the amplitudes of the first and second harmonics change as the refractive index of the medium surrounding the interaction length of the PTL fibre 52 is changed by immersed it in each of a number of liquids of different refractive index. Fig. 16 shows how the amplitudes of the two harmonics change as the interaction length, initially in air, is first submerged in deionised water ($n_s \sim 1.333$) and is then immersed in various C.R.I. liquids of differing refractive index.
Taking the inverse tangent of the ratio of the first to second harmonics generates the plot shown in Fig. 17. In order to produce this plot it is necessary to look for the values of $\pm\pi/2$ from the inverse tangent operation. At these points $\pm\pi/2$ the tangent function is discontinuous, so the addition of $\pi$ (for phase progression) or the subtraction of $\pi$ (for phase retardation) is needed to achieve a continuous function.
The limiting error in the refractive index sensor 70 due to thermal drift is estimated from experimental data recorded over a period of 2 hours to be $\Delta\phi_{\text{Total}} \sim \pm 0.005$ radians. This agrees well with a theoretical figure of $\sim \pm 0.003$ radians. The stability of the refractive index sensor in terms of the minimum detectable change in the refractive index $n_s$ of the surrounding medium is dependent on the sensitivity of the cladding mode associated with the attenuation band to changes in $n_s$ and $T$ (spectral sensitivity). It is also dependent on the refractive index of the surrounding medium; as the value of the surrounding medium's refractive index increases, the thermally induced wavelength shift of the attenuation band becomes greater.
The optical waveguide grating device according to the first embodiment described above provides the advantage that, under specific operating conditions, it is insensitive to changes in the refractive index of the surrounding medium. This means that when, following fabrication, the bare section of an optical fibre containing an LPG is recoated, the spectral profile of the attenuation bands associated with cladding modes of radial order 26 or lower (in particular radial order 15 or lower) are not changed as a result of the recoating process. This is particularly advantageous in telecommunication applications where the spectral properties of gratings must meet stringent wavelength accuracy requirements, for example the use of gratings to perform gain-flattening of the gain spectrum of an Erbium doped fibre amplifier. The insensitivity of an LPG fabricated in PTL fibre is also advantageous in connection with the embedding of LPG devices into materials for performing bend measurement and shape sensing.

In addition, due to the different characteristics of the attenuation bands corresponding to different cladding modes, an LPG fabricated in PTL fibre has two distinct sensing regimes which may be used to address the problem of distinguishing between the effects of changes in temperature and external refractive index. The described invention therefore provides sensors based on an LPG fabricated in PTL fibre suitable for independent and simultaneous temperature and refractive index sensing. The described temperature sensor also provides the advantage of increased measurement resolution as compared to known temperature sensors based on fibre Bragg gratings. The typical temperature sensitivity of a Bragg grating, in the same spectral region as the described LPGs, is of the order of 0.1 nm/$^\circ$C, whereas the temperature sensitivity of the described LPG is approximately an order of magnitude greater, being of the order of 1nm/$^\circ$C.

The optical waveguide grating device according to the fourth embodiment and the refractive index sensor according to the fifth embodiment described above provide various advantages, as follows. Compared to Abbe refractometers, which have a resolution of $\sim$10-2$\times$10$^{-5}$ (1.33 to 1.58) and are relatively expensive, the refractive index sensor described displays better measurement resolution and has the potential for being low cost. The described refractive index sensor is much less optically complex than many known sensors based on FBG evanescent field interactions. Many known LPG-based sensors use an optical spectrum analyser as part of their interrogation apparatus. The refractive index sensor described here does not require use of an optical spectrum analyser to interrogate the LPG M-Z interferometer, and gives an approximately three-fold increase in measurement resolution over such sensors.

The described refractive index sensor provides a measurement accuracy which is comparable to laboratory based measurement techniques used in industry such as high performance liquid chromatograph and UV Spectroscopy. The refractive index sensor described provides an advantage over these lab based measurement techniques in that measurements can be made in-situ for applications in continuous process control.

Various modifications may be made to the described embodiments without departing from the scope of the invention. For example, in the optical waveguide grating device according to the first embodiment the LPG may be replaced by a strong Bragg grating or a tilted Bragg grating. The spectral characteristics of the LPG may also be different to those described. The PTL optical fibre may be replaced by a different multilayered optical fibre, which may have a greater number of layers within its structure. The PTL optical fibre may also be replaced by a planar optical waveguide having a multilayered waveguide structure.

Referring to the temperature sensor and the refractive index sensor utilising the optical waveguide grating device described in the first embodiment, different radial order cladding modes may be used in place of those described. The skilled person will appreciate that the type and spectral characteristics of the optical signal source used will depend upon the spectral characteristics of the gratings used, and may also depend upon the rest of the optical circuit of the sensor. The skilled person will also appreciate that the type of receiving means used will also depend upon the spectral characteristics of the gratings used and on the optical signal source.

Referring particularly to the LPG M-Z interferometer based optical waveguide grating device and the refractive index sensor incorporating it, the PTL fibre may be replaced by a different multilayered optical fibre. The PTL fibre may also be replace by a planar optical waveguide. The period of the LPGs may be different to those described and they may be separated by a different distance. The interaction length may also be of a different length to that described. The DFB laser may be replaced by a different optical source. The receiving means may comprise different components to that described. It will be appreciated by the skilled person that although only a refractive index sensor is described here, the LPG M-Z interferometer optical waveguide grating device may also be used within a temperature sensor, having generally similar construction to the refractive index sensor described.

## Claims

1. An optical waveguide grating device comprising:

   an optical waveguide having a core, a first cladding layer surrounding the core, and a second cladding layer surrounding the first cladding layer, the refractive index of the first cladding layer being less than the refractive index of the core, and the refractive index of the second cladding layer being less than the refractive index of the first cladding layer,

the optical waveguide including a grating section within which is provided an optical waveguide grating having a grating structure which couples at least part of an optical signal propagating in the optical waveguide and incident on the optical waveguide grating into at least one cladding mode of the optical waveguide.

2. A device as claimed in claim 1, wherein the optical waveguide is an optical fibre or a planar optical waveguide.

3. A device as claimed in claim 2, wherein the optical fibre is a single mode multilayered optical fibre and may be a three layered optical fibre, such as progressive three layered optical fibre or matched index optical fibre, or may comprise four or more layers.

4. A device as claimed in any preceding claim, wherein the optical waveguide grating is a long period grating, a strong Bragg grating, or a tilted Bragg grating.

5. A device as claimed in any of claims 1 to 3, wherein two long period gratings are provided within the grating section of the optical waveguide, the long period gratings being arranged to together form an in-line Mach-Zehnder interferometer.

6. A temperature sensor comprising:

an optical waveguide grating device as claimed in any preceding claim;
an optical signal source coupled to one end of the optical waveguide and being operable to generate an optical signal; and
receiving means coupled to the other end of the optical waveguide, and being operable to detect a transmitted optical signal and convert the detected optical signal into a corresponding temperature value.

7. A temperature sensor as claimed in claim 6, wherein the temperature sensor is insensitive to the refractive index of a surrounding medium, the optical waveguide grating coupling the at least part of the optical signal into at least one of the first to twenty-sixth radial order cladding modes of the optical waveguide.

8. A temperature sensor as claimed in claim7, wherein the optical waveguide grating couples the at least part of the optical signal into at least one of the first to fifteenth radial order cladding modes of the optical waveguide.

9. A refractive index sensor comprising:

an optical waveguide grating device as claimed in any of claims 1 to 5, the optical waveguide grating coupling the at least part of the optical signal into the twenty-seventh or higher radial order cladding mode of the optical waveguide;
an optical signal source coupled to one end of the optical waveguide and being operable to generate an optical signal; and
receiving means coupled to the other end of the optical waveguide, and being operable to detect a transmitted optical signal and convert the detected optical signal into a corresponding refractive index value.

10. A refractive index sensor as claimed in claim 9, wherein the sensor may additionally sense temperature, by the optical waveguide grating coupling part of the optical signal into one of the first to fifteenth radial order cladding modes, and the receiving means is further operable to simultaneously determine a corresponding temperature value from the detected optical signal.

Figure 1

Figure 2(a)

Figure 2(b)

Figure 3

Figure 4

Figure 5

Figure 6

Figure 7

Figure 8

EP 1 372 006 A1

Figure 9

Figure 10

17

Figure 11

Figure 12

Figure 13

Figure 14

Figure 15

Figure 16

Figure 17

**European Patent Office**

**EUROPEAN SEARCH REPORT**

Application Number

EP 02 25 4195

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 366 722 B1 (MURPHY KENT A ET AL) 2 April 2002 (2002-04-02) | 1-4,6,9 | G02B6/16 |
| Y | * figure 1 * <br> * figure 2 * <br> * column 3, line 35 - column 6, line 50 * | 5 | |
| X | A. A. ABRAMOV ET AL: "Temperature-sensitive long-period fiber gratings for wideband tunable filters" PRESENTED AT OFC'99, 21 - 26 February 1999, pages 144-146, XP002218109 * page 144 - page 145 * | 1-4,6-9 | |
| X | ESPINDOLA R P ET AL: "External refractive index insensitive air-clad long period fibre grating" ELECTRONICS LETTERS, IEE STEVENAGE, GB, vol. 35, no. 4, 18 February 1999 (1999-02-18), pages 327-328, XP006011769 ISSN: 0013-5194 * page 327 - page 328 * | 1-4 | |
| X | LEE B H ET AL: "Cladding-surrounding interface insensitive long-period grating" ELECTRONICS LETTERS, IEE STEVENAGE, GB, vol. 34, no. 11, 28 May 1998 (1998-05-28), pages 1129-1130, XP006009828 ISSN: 0013-5194 * page 1.65 - page 1.66 * | 1-4 | |
| X | US 2002/003926 A1 (TAKUSHIMA MICHIKO ET AL) 10 January 2002 (2002-01-10) * figure 4 * <br> * paragraph [0004] * <br> * paragraph [0011] * <br> * paragraph [0040] - paragraph [0043] * | 1-4 | |

TECHNICAL FIELDS SEARCHED (Int.Cl.7)

G02B
G01K
G01B
G01D

-/--

The present search report has been drawn up for all claims

| Place of search | Date of completion of the search | Examiner |
|---|---|---|
| MUNICH | 24 October 2002 | Anderson, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 02 25 4195

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | E. M. DIANOV ET AL. : "In-Fiber Mach-Zehnder Interferometer Based on a Pair of Long-Period Gratings" 2ND EUROPEAN CONFERENCE ON OPTICAL COMMUNICATION ECOC, 1996, pages 1.65-1.67, XP010303066 Oslo * abstract * | 5 | |
| A | EGGLETON B J ET AL: "ELECTRICALLY TUNABLE EFFICIENT BROADBAND LONG-PERIOD FIBER GRATING FILTER" TECHNICAL DIGEST. CLEO/PACIFIC RIM. THE PACIFIC RIM CONFERENCE ON LASERS AND ELECTRO-OPTICS, XX, XX, 1999, pages 12-13, XP000919155 * column 1 - column 2 * | 1-4,6-8 | |
| A | ABRAMOV A A ET AL: "ELECTRICALLY TUNABLE EFFICIENT BROAD-BAND FIBER FILTER" IEEE PHOTONICS TECHNOLOGY LETTERS, IEEE INC. NEW YORK, US, vol. 11, no. 4, April 1999 (1999-04), pages 445-447, XP000830088 ISSN: 1041-1135 * page 445 - page 446 * | 1-4,6-9 | TECHNICAL FIELDS SEARCHED (Int.Cl.7) |
| A | PATRICK H J ET AL: "ANALYSIS OF THE RESPONSE OF LONG PERIOD FIBER GRATINGS TO EXTERNAL INDEX OF REFRACTION" JOURNAL OF LIGHTWAVE TECHNOLOGY, IEEE. NEW YORK, US, vol. 16, no. 9, 1 September 1998 (1998-09-01), pages 1606-1612, XP000786633 ISSN: 0733-8724 * page 1606 - page 1616; figures 4,5 * | 1-4,6-9 | |

-/--

The present search report has been drawn up for all claims

| Place of search | Date of completion of the search | Examiner |
|---|---|---|
| MUNICH | 24 October 2002 | Anderson, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

**Application Number**

EP 02 25 4195

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | SHU X ET AL: "HIGH-TEMPERATURE SENSITIVITY OF LONG-PERIOD GRATINGS IN B-GE CODOPED FIBER" IEEE PHOTONICS TECHNOLOGY LETTERS, IEEE INC. NEW YORK, US, vol. 13, no. 8, August 2001 (2001-08), pages 818-820, XP001107452 ISSN: 1041-1135 * page 818 - page 820; figures 3,4 * ----- | 6-9 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 24 October 2002 | Anderson, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

**EP 1 372 006 A1**

## ANNEX TO THE EUROPEAN SEARCH REPORT
## ON EUROPEAN PATENT APPLICATION NO.

EP 02 25 4195

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2002

| Patent document cited in search report | | Publication date | Patent family member(s) | | Publication date |
|---|---|---|---|---|---|
| US 6366722 | B1 | 02-04-2002 | NONE | | |
| US 2002003926 | A1 | 10-01-2002 | AU | 2003800 A | 01-08-2000 |
| | | | CN | 1316062 T | 03-10-2001 |
| | | | EP | 1191365 A1 | 27-03-2002 |
| | | | WO | 0042459 A1 | 20-07-2000 |
| | | | TW | 419607 B | 21-01-2001 |

EPO FORM P0459

For more details about this annex : see Official Journal of the European Patent Office, No. 12/82